# EUROPÄISCHE PATENTSCHRIFT

(11) **EP 2 710 726 B1**
(45) Veröffentlichungstag und Bekanntmachung des Hinweises auf die Patenterteilung: **08.07.2020**
(21) Anmeldenummer: 12720162.2
(22) Anmeldetag: 09.05.2012
(51) Int. Cl.: H02P 6/12, H02H 7/08, H02P 29/02

(54) **VORRICHTUNG ZUM ANSTEUERN EINES ELEKTRONISCH KOMMUTIERTEN ELEKTROMOTORS**
DEVICE FOR ACTUATING AN ELECTRONICALLY COMMUTATED ELECTRIC MOTOR
DISPOSITIF DE COMMANDE D'UN MOTEUR ÉLECTRIQUE À COMMUTATION ÉLECTRONIQUE

(30) Priorität: 20.05.2011 DE 102011076166
(43) Veröffentlichungstag der Anmeldung: 26.03.2014
(73) Patentinhaber: Robert Bosch GmbH, 70442 Stuttgart (DE)
(72) Erfinder: EISENHARDT, Harald, 71277 Rutesheim (DE)
(86) Internationale Anmeldenummer: PCT/EP2012/058481
(87) Internationale Veröffentlichungsnummer: WO 2012/159878

(56) Entgegenhaltungen:
- DE-A1- 19 939 861
- DE-A1-102005 061 215
- FR-A1- 2 400 272
- GB-A- 1 212 597
- US-A- 3 349 309

## Beschreibung

Die Erfindung betrifft eine Vorrichtung zum Ansteuern eines elektronisch kommutierten Elektromotors und ein Verfahren zum Ansteuern eines derartigen Elektromotors.

### Stand der Technik

Elektronisch kommutierte Gleichstrommotoren werden herkömmlicher Weise mittels einer elektronischen Endstufenschaltung derart angesteuert, dass diese eine Versorgungsspannung periodisch von einer Wicklung auf die nächste Wicklung des Elektromotors weiterschaltet. Zur Ansteuerung der Highside-Schalter der genannten Endstufenschaltung kann eine elektronische Ladungspumpe verwendet werden, um eine Verwendung von spezifischen n-Kanal Halbleiterbauelementen in der Endstufenschaltung als Highside-Schalter zu ermöglichen. Mittels eines Mikrocontrollers werden PWM-(pulsweitenmodulierte) Signale erzeugt, welche durch periodische und zur Position des Motors synchrone Weiterschaltung dieser Signale die genannte Endstufenschaltung ansteuern. Im Ergebnis wird der Elektromotor ohne mechanischen Kommutator angetrieben.

Ein Fehlerzustand beim Betreiben des Elektromotors mittels des beschriebenen Verfahrens kann darin bestehen, dass der Mikrocontroller fehlerhaft arbeitet, indem er beispielsweise die PWM-Signale nicht mehr generiert oder nicht mehr synchron zur Motorposition weiterschaltet, weil der vorgesehene Programmablauf unbeabsichtigt und unbemerkt abgebrochen wird und dadurch die Endstufe gehindert ist, die Wicklungen des Elektromotors ordnungsgemäß weiterzuschalten. Als Folge davon kann es trotz der stromanstiegsbegrenzenden Eigenschaft der Induktivität der Wicklungen zu einem unkontrollierten Stromanstieg in den Wicklungen mit übermäßiger Wärmeentwicklung kommen, woraus unter Umständen ein Brand im Elektromotor resultieren kann.

Herkömmlicherweise sind in der Leistungselektronik mehrere Möglichkeiten zur Verhinderung derartiger Fehlerzustände bekannt. Beispielsweise kann der Mikrocontroller einen internen Software-Watchdog und zwei unabhängige Taktquellen mit Reset-Funktionalität aufweisen. Ferner kann auch ein externer Hardware-Watchdog eine Reset-Funktionalität aufweisen, wobei der Mikrocontroller oder die Watchdogschaltung optional eine zusätzliche Endstufenabschaltung ausführen kann. Weiterhin kann ein externes Gatelatch zusätzlich zum internen Software-Watchdog vorgesehen sein, wobei die Gates auf ein Fehlersignal des Mikrocontrollers getriggert und z.B. dauerhaft abgeschaltet werden. Dadurch kann ein Fehlerzustand sicher gelatcht (d.h. in einem definierten Zustand gespeichert) und in der Folge vom Mikrocontroller ausgelesen und aktiv zurückgesetzt werden. Aufwändigere Absicherungssysteme sehen ein Mehrprozessorsystem mit gegenseitiger Überwachung und/oder eine redundante Endstufenabschaltung mittels Watchdog vor.

In kostensensitiven Geräten wird in der Regel eine kostengünstige Variante der Fehlerabsicherung mittels Mikrocontroller-internem Software-Watchdog und zwei unabhängigen Taktquellen mit Reset-Funktionalität verwendet. Bei dieser Ausführung kann es unter ungünstigen Betriebsbedingungen passieren, dass der Mikrocontroller trotz der zwei unabhängigen Taktquellen die Reset-Funktionalität nicht spezifikationsgemäß ausführt und Ports des Mikrocontrollers in willkürlichen Schaltzuständen gesetzt bleiben. Dieser Fehlerfall kann auch dazu führen, dass die Ladungspumpe zur Ansteuerung der Endstufen falsch angesteuert wird, sofern der Takt für die Ladungspumpe ebenfalls durch den Mikrocontroller erzeugt wird, woraus ein unkontrollierter Linearbetrieb der Highside-Endstufen resultieren kann.

Die US 3,349,309 A offenbart einen batteriebetriebenes Motorsteuersystem.

Die DE 199 39 861 A1 offenbart ein Motor-Laststeuersystem.

Die GB 1 212 597 A offenbart eine Vorrichtung zur Erkennung von elektrischen Fehlern.

Offenbarung der Erfindung Es ist daher die Aufgabe der Erfindung, eine verbesserte Ansteuerungsvorrichtung für einen elektronisch kommutierten Elektromotor bereitzustellen.

Die Erfindung wird gelöst mit einer Vorrichtung zum Ansteuern eines elektronisch kommutierten Elektromotors, wobei die Vorrichtung eine Steuereinrichtung aufweist. Mittels der Steuereinrichtung sind Steuersignale an eine erste Schalteinrichtung ausgebbar, mittels der der Elektromotor ansteuerbar ist. Die Vorrichtung weist ferner eine zweite Schalteinrichtung zum Schalten der ersten Schalteinrichtung an eine elektrische Versorgungsspannung auf, wobei die ersten Steuersignale mit einem zweiten Steuersignal für eine Auslöseeinrichtung der zweiten Schalteinrichtung funktionell gekoppelt sind.

Vorteilhaft ist es mittels der erfindungsgemäßen Vorrichtung möglich, dass bei einem Ausbleiben der Steuersignale die Auslöseeinrichtung mittels der zweiten Schalteinrichtung eine Abschaltung der ersten Schalteinrichtung von der Versorgungsspannung durchführt. Für ein ordnungsgemäßes Bestromen des Elektromotors ist es erforderlich, dass von der Steuereinrichtung ordnungsgemäße erste Steuersignale zum Ansteuern der ersten Schalteinrichtung bereitgestellt werden. Durch die funktionelle Kopplung der Steuersignale ist mithin sichergestellt, dass die Wicklungen des Elektromotors nur in korrekter Weise bestromt werden können.

Die Erfindung sieht vor, dass die ersten Steuersignale periodische Signale der Steuereinrichtung sind, welches mittels eines auf der Steuereinrichtung ablaufenden Computerprogramms generiert werden. Dadurch ist eine einfache Art und Weise der Erzeugung der ersten Steuersignale unterstützt.

Erfindungsgemäß sieht die Vorrichtung vor, dass das zweite Steuersignal mittels des Computerprogramms von den ersten Steuersignalen abgeleitet ist. Dabei ist das zweite Steuersignal von der Steuereinrichtung aus einem periodischen Ereignis, beispielsweise einem Interrupt abgeleitet, der zur Generierung der ersten Steuersignale verwendet wird. Dadurch lässt sich softwaretechnisch auf einfache und kostengünstige Weise unter Ausnutzung von vorhandenen internen Ressourcen der Steuereinrichtung eine funktionelle Kopplung zwischen dem zweiten Steuersignal und den ersten Steuersignalen erzielen.

Eine vorteilhafte Weiterbildung der Vorrichtung sieht vor, dass das zweite Steuersignal im Wesentlichen eine halbe Frequenz der ersten Steuersignale aufweist. Diese Ausgestaltung des zweiten Steuersignals lässt sich ohne zusätzliche Schaltungsaufwendungen auf eine besonders einfache Art und Weise aus den ersten Steuersignalen ableiten.

Erfindungsgemäß sieht die Vorrichtung vor, dass die Auslöseeinrichtung als eine elektronische Ladungspumpe ausgebildet ist. Durch die Verwendung einer elektronischen Ladungspumpe wird eine technisch gut geeignete Schaltungsvariante zu einer technischen Realisierung der Auslöseeinrichtung eingesetzt, die das als periodisches Wechselsignal ausgebildete zweite Steuersignal entsprechend verarbeitet.

Die Erfindung sieht vor, dass die erste Schalteinrichtung bei einem Ausbleiben der ersten Steuersignale mittels der Auslöseeinrichtung und der zweiten Schalteinrichtung von der Versorgungsspannung getrennt wird. Somit wird aufgrund der funktionellen Kopplung zwischen den ersten Steuersignalen und dem zweitem Steuersignal sichergestellt, dass die erste Schalteinrichtung von der elektrischen Versorgungsspannung getrennt wird, wenn aufgrund eines Störungsfalls oder bei regulärem Abschalten die Steuereinrichtung die ersten Steuersignale nicht mehr ausgibt. Eine erhöhte Betriebssicherheit des elektronisch kommutierten Elektromotors ist auf diese Weise unterstützt.

Die Erfindung wird im Folgenden anhand zweier Figuren detailliert beschrieben, wobei die Figuren lediglich erfindungswesentliche Prinzipien darstellen. Die Funktions- und Ansteuerungsprinzipien eines elektronisch kommutierten Elektromotors sind bekannt und werden somit in den Figuren und in der Beschreibung nicht näher erläutert. In den Figuren zeigt:
- Figur 1: ein prinzipielles Blockschaltbild einer Ausführungsform einer erfindungsgemäßen Vorrichtung zum Ansteuern eines elektronisch kommutierten Elektromotors; und
- Figur 2: ein Detailschaltbild einer Ausführungsform einer die erste Schalteinrichtung ansteuernden Auslöseeinrichtung.

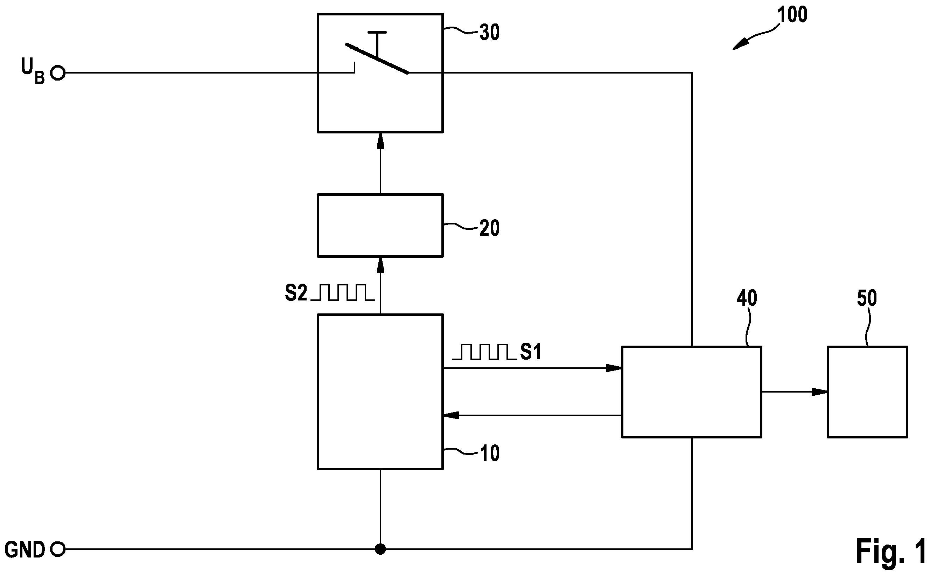

Figur 1 zeigt ein prinzipielles Blockschaltbild einer Vorrichtung 100 zum Ansteuern eines elektronisch kommutierten Elektromotors 50. Der elektronisch kommutierte Elektromotor kann beispielsweise innerhalb eines Kraftfahrzeugs (nicht dargestellt) angeordnet sein und für eine Komfortfunktionalität innerhalb des Kraftfahrzeugs vorgesehen sein. Die Vorrichtung 100 weist eine Steuereinrichtung 10 auf, die beispielsweise als ein elektronischer Mikrocontroller oder Mikroprozessor ausgebildet ist. Mittels der Steuereinrichtung 10 werden erste Steuersignale S1 erzeugt, die zur Steuerung des elektronisch kommutierten Elektromotors 50 dienen. Zu diesem Zweck werden die ersten Steuersignale S1 einer ersten Schalteinrichtung 40 mit einer elektronischen Ladungspumpe (nicht dargestellt) und einer Endstufenschaltung (nicht dargestellt) zugeführt. Die Endstufenschaltung der ersten Schalteinrichtung 40 steuert den Elektromotor 50 an.

Mindestens eines der Steuersignale der ersten Steuersignale S1 kann beispielsweise als ein PWM-Signal (pulsweitenmoduliertes Signal) ausgebildet sein, das zur Ansteuerung der elektronischen Ladungspumpe innerhalb der ersten Schalteinrichtung 40 verwendet wird, welche ihrerseits in Verbindung mit den weiteren Steuersignalen der ersten Steuersignale S1 die Endstufenschaltung (beispielsweise eine 2H-Ausgangsstufe, nicht dargestellt) innerhalb der ersten Schalteinrichtung 40 ansteuert. Diese weiteren Steuersignale können zur Generierung einer geräuschreduzierenden Kurvenform bei sensitiven Anwendungen oder zur Drehzahlregelung ebenfalls als PWM-Signale ausgebildet sein. Die 2H-Ausgangsstufe stellt im Prinzip eine H-Brückenschaltung dar, die an ihren vier Eckpunkten jeweils ein Halbleiterschaltungselement aufweist, wobei die vier Halbleiterschaltungselemente zu einem richtungsmäßig definierten Bestromen von Wicklungen (nicht dargestellt) des elektronisch kommutierten Elektromotors 50 verwendet werden. Jedes Mal, wenn während einer Rotation des Elektromotors 50 eine Wicklung des Elektromotors 50 einen Polwechsel unter einem Magneten des Elektromotors 50 erfährt, muss die Stromrichtung in der entsprechenden Wicklung entsprechend geändert werden.

Für ein einwandfreies Arbeiten der Ansteuerung der Endstufenschaltung der ersten Schalteinrichtung 40 ist es somit erforderlich, dass die ersten Steuersignale S1 die Ladungspumpe und die Endstufenschaltung derart ansteuern, dass die Wicklungen des Elektromotors 50 richtungsmäßig korrekt bestromt werden können. Der Steuereinrichtung 10 wird zu diesem Zweck die Position des Rotors des Elektromotors 50 zugeführt. Dies kann durch eine sensorlose Schaltungsausführung (z.B. Auswertung Back EMF) oder durch eine Schaltungsausführung mit Sensoren (z.B. Hall-Sensoren) erfolgen.

Highside-Schalter an den oberen Ecken innerhalb der H-förmigen Endstufenschaltung sind deshalb vorzugsweise als n-Kanal-MOSFETs ausgebildet, die mittels der Ladungspumpe für die Endstufenschaltung verwendbar gemacht werden, indem sie mittels einer positiven elektrischen Spannung gegenüber dem Plus Potential der Versorgungsspannung U_{B} aufgesteuert werden. n-Kanal-MOSFETs weisen gegenüber p-Kanal-MOSFETs im Wesentlichen nur etwa die halbe Chipfläche auf und werden deshalb bevorzugt als Highside-Schalter innerhalb der 2H-Ausgangsstufe verwendet.

Die erfindungsgemäße Vorrichtung 100 sieht eine Auslöseeinrichtung 20 vor, mittels der eine zweite Schalteinrichtung 30 angesteuert wird. Die zweite Schalteinrichtung 30 kann beispielsweise als ein herkömmliches Klemme 30 (auch als Dauerplus oder B+ bezeichnet) -Relais ausgebildet sein, das zu Schutzzwecken innerhalb eines Kraftfahrzeugs eingesetzt wird. Beispielsweise dient das Klemme 30-Relais dazu, dass eine Elektronik des Kraftfahrzeugs bei längeren Standzeiten an einer Ruhestromaufnahme und damit ungewollter Batterieentladung gehindert ist. Ferner dient das Klemme-30-Relais dazu, die nachgeschaltete Elektronik vor einem verpolten Anschließen an die Kraftfahrzeugbatterie zu schützen.

Die Auslöseeinrichtung 20 ist vorzugsweise als eine elektronische Ladungspumpe ausgebildet. Das bekannte Prinzip der Ladungspumpe verwendet ein Wechselsignal an einem Eingang, um an einem Ausgang eine im Wesentlichen konstante Gleichspannung zu erzeugen. Bei einem Ausbleiben des Eingangs-Wechselsignals bricht die Ausgangsgleichspannung zusammen.

Erfindungsgemäß ist vorgesehen, dass ein zweites Steuersignal S2 von der Steuereinrichtung 10 erzeugt und als ein Steuersignal für die Auslöseeinrichtung 20 ausgegeben wird. Dabei sind die ersten Steuersignale S1 und das zweite Steuersignal S2 innerhalb der Steuereinrichtung 10 funktionell miteinander gekoppelt. Beispielsweise kann vorgesehen sein, dass von der Steuereinrichtung 10 ein Ereignis (z.B. ein Interrupt) das zur Erzeugung der ersten Steuersignale S1 verwendet wird, auch für die Erzeugung des zweiten Steuersignals S2 verwendet wird. Auf diese Weise wird das zweite Steuersignal S2 nur dann generiert, wenn die ersten Steuersignale S1 ordnungsgemäß generiert werden.

Auf einfache Weise kann das zweite Steuersignal S2 mit einer halben Frequenz der ersten Steuersignale S1 erzeugt werden, indem ein periodischer Interrupt, der z.B. bei jedem Überlauf eines PWM-Registers zur Erzeugung der ersten Steuersignale S1 benutzt wird, auch zur Erzeugung des zweiten Steuersignals S2 benutzt wird. Dies kann beispielsweise dadurch erfolgen, dass das zweite Steuersignal S2 dadurch erzeugt wird, dass ein Port der Steuereinrichtung 10 im Interrupt umgeschaltet wird, der bei einem Überlauf der ersten Steuersignale S1 innerhalb der Steuereinrichtung 10 erzeugt wird. Auf diese Weise kann der beim Überlauf des PWM-Registers generierte Interrupt der Steuereinrichtung 10 komfortabel ausgenutzt werden, um das zweite Steuersignal S2 mit ca. 50% Tastverhältnis (engl. Dutycycle) und halber Frequenz der ersten Steuersignale S1 zu erzeugen.

Die Ansteuerung der Auslöseeinrichtung 20 mittels des zweiten Steuersignals S2 stellt ein Erfordernis für die Anschaltung der ersten Schalteinrichtung 40 an eine elektrische Versorgungsspannung U_{B} (beispielsweise eine Bordspannung des Kraftfahrzeuges) dar. In einem Fehlerfall, wenn beispielsweise die ersten Steuersignale S1 nicht mehr ordnungsgemäß generiert werden, wird auch das zweite Steuersignal S2 - da es funktionell mit den ersten Steuersignalen S1 gekoppelt ist - nicht mehr generiert. Dadurch wird die Auslöseeinrichtung 20 angeregt, um die zweite Schalteinrichtung 30 von der Versorgungsspannung U_{B} zu trennen.

Dadurch ist die den Elektromotor 50 ansteuernde Endstufenschaltung innerhalb der ersten Schalteinrichtung 40 an einem unkontrollierten Linearbetrieb oder an einer zur Motorposition asynchronen Ansteuerung gehindert und die Wicklungen des Elektromotors 50 können daher vorteilhaft nur korrekt bestromt werden. Im umgekehrten Betriebsfall kann die elektrische Versorgungsspannung U_{B} erst dann an die erste Schalteinrichtung 40 angeschaltet werden, sobald die ersten Steuersignale S1 von der Steuereinrichtung 10 ordnungsgemäß erzeugt werden. Dies ist beispielsweise bei einem Einschaltvorgang des Elektromotors 50 von Bedeutung.

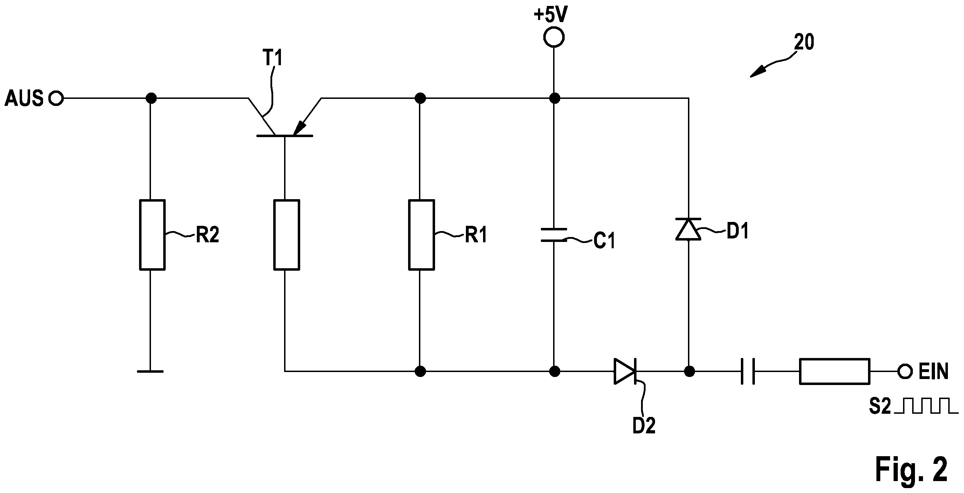

Figur 2 zeigt ein prinzipielles Detailschaltbild einer Ausführungsform der Auslöseeinrichtung 20. An einem Eingang EIN der Auslöseeinrichtung 20 wird das zweite Steuersignal S2 angelegt, das von den ersten Steuersignalen S1 innerhalb der Steuereinrichtung 10 softwaremäßig abgeleitet ist. Das zweite Steuersignal S2 kann beispielsweise in einem Frequenzbereich zwischen ca. 8 kHz und ca. 12,5 kHz liegen, wobei ein Port der Steuereinrichtung 10 zwischen Massepotential (GND) und +5V periodisch hin- und herschaltet. Mittels zweier Dioden D1, D2 wird ein Kondensator C1 auf eine Spannung von (+5V - 2 x Diodenflußspannungen) aufgeladen. Diese Spannung wird dazu benutzt, einen Transistor T1 aufzusteuern. Die Ausgangsspannung an einem Ausgang AUS der Auslöseeinrichtung 20 wird benutzt, um mittels eines Relais (nicht dargestellt) innerhalb der zweiten Schalteinrichtung 30 die zweite Schalteinrichtung 30 zu schließen. Dadurch wird die der zweiten Schalteinrichtung 30 nachgeschaltete Elektronik, insbesondere die erste Schalteinrichtung 40 an die Versorgungsspannung U_{B} angeschaltet.

Im Falle, dass die ersten Steuersignale S1 ausbleiben, bleibt aufgrund der funktionellen Kopplung zwischen den ersten Steuersignalen S1 und dem zweiten Steuersignal S2 auch das zweite Steuersignal S2 aus (beispielsweise in einem Fehlerfall oder wenn regulär abgeschaltet werden soll). Als Folge wird der Kondensator C1 über den Widerstand R1 entladen und somit der Transistor T1 gesperrt. Im Ergebnis wird das Relais der zweiten Schalteinrichtung 30 dazu benutzt, um die erste Schalteinrichtung 40 von der Versorgungsspannung U_{B} zu trennen. Der Widerstand R2 dient dazu, die zweite Schalteinrichtung 30 in einen definierten Schaltzustand zu versetzen, wenn das zweite Steuersignal S2 am Eingang EIN der Auslöseeinrichtung 20 ausbleibt.

Zusammenfassend wird die Realisierung einer kostengünstigen automatischen An- und Abschaltung eines elektronisch kommutierten Elektromotors von einer ansteuernden Endstufenschaltung vorgeschlagen. Dies geschieht mittels einer als elektronische Ladungspumpe ausgebildeten Auslöseeinrichtung 20, die von einem zweiten Steuersignal S2 angesteuert wird, welches funktionell mit den ersten Steuersignalen S1 für die Endstufenschaltung für den Elektromotor 50 gekoppelt ist. Mittels dieser funktionellen Kopplung wird sichergestellt, dass die elektrische Versorgungsspannung U_{B} nur dann aufgeschaltet wird/bleibt, wenn die ersten Steuersignale S1 von der Steuereinrichtung 10 ordnungsgemäß generiert werden. Auf diese Weise wird die als Klemme-30-Relais ausgebildete zweite Schalteinrichtung 30, die hardwaretechnisch im Kraftfahrzeug oder der Applikation bereits vorhanden ist, für eine weitere Zusatzfunktion ausgenutzt, um einen fehlersicheren Betrieb des elektronisch kommutierten Elektromotors 50 zu gewährleisten. Auf diese Weise kann bei einem Ausfall der Ansteuerelektronik des Elektromotors die fehlerhafte Komponente lokalisiert und ausgetauscht werden, ohne dass der betroffene Elektromotor und Elektronik Schaden oder als Folge unzulässiger Erwärmung die Umgebung Schaden erleidet.

Erfindungsgemäß ist also unterstützt, dass ein defektes Ansteuerprogramm für die Endstufenschaltung des elektronisch kommutierten Elektromotors als ein Trigger dazu dient, dass die elektrische Versorgungsspannung definiert von einer Ansteuerelektronik für den Elektromotor getrennt wird.

Ergänzend zum herkömmlichen Verfahren der Absicherung von Fehlerzuständen mittels Mikrocontrollers mit internem Software-Watchdog und zwei unabhängigen Taktquellen mit Reset-Funktionalität wird mittels der Erfindung eine verbesserte und kostengünstige Vorrichtung und ein Verfahren zum fehlersicheren Betrieb eines elektronisch kommutierten Elektromotors bereitgestellt.

## Patentansprüche

1. Vorrichtung (100) zum Ansteuern eines elektronisch kommutierten Elektromotors (50), wobei die Vorrichtung (100) eine Steuereinrichtung (10) aufweist, wobei mittels der Steuereinrichtung (10) erste Steuersignale (S1) an eine erste Schalteinrichtung (40) ausgebbar sind, mittels der der Elektromotor (50) ansteuerbar ist, wobei die Vorrichtung (100) ferner eine zweite Schalteinrichtung (30) zum Schalten der ersten Schalteinrichtung (40) an eine elektrische Versorgungsspannung (U_{B}) aufweist, wobei die ersten Steuersignale (S1) mit einem zweiten Steuersignal (S2) für eine Auslöseeinrichtung (20) der zweiten Schalteinrichtung (30) funktionell gekoppelt sind, und wobei das zweite Steuersignal (S2) von der Steuereinrichtung (10) erzeugt wird, **dadurch gekennzeichnet, dass** die ersten Steuersignale (S1) periodische Signale der Steuereinrichtung (10) sind, welche mittels eines auf der Steuereinrichtung (10) ablaufenden Computerprogramms generiert werden, wobei das zweite Steuersignal (S2) mittels des Computerprogramms von den ersten Steuersignalen (S1) abgeleitet ist, wobei das zweite Steuersignal (S2) von der Steuereinrichtung (10) aus einem periodischen Interrupt abgeleitet ist, der zur Generierung der ersten Steuersignale (S1) verwendet wird, wobei die Auslöseeinrichtung (20) als eine elektronische Ladungspumpe ausgebildet ist, wobei die erste Schalteinrichtung (40) bei einem Ausbleiben der ersten Steuersignale (S1) mittels der Auslöseeinrichtung (20) und der zweiten Schalteinrichtung (30) von der Versorgungsspannung (U_{B}) getrennt wird.

2. Vorrichtung nach Anspruch 1, wobei das zweite Steuersignal (S2) im Wesentlichen eine halbe Frequenz der ersten Steuersignale (S1) aufweist.

3. Verfahren zur Ansteuerung eines elektronisch kommutierten Elektromotors (50), wobei mittels einer Steuereinrichtung (10) eine Bestromung von Wicklungen des Elektromotors (50) mittels einer ersten Schalteinrichtung (40) gesteuert wird, umfassend die Schritte:
- Erzeugen von ersten Steuersignalen (S1) mittels der Steuereinrichtung (10);
- Erzeugen eines zweiten Steuersignals (S2) mittels der Steuereinrichtung (10), wobei die ersten Steuersignale (S1) und das zweite Steuersignal (S2) funktionell miteinander gekoppelt werden; und
- Ansteuern einer Auslöseeinrichtung (20) mittels des zweiten Steuersignals (S2), wobei die Auslöseeinrichtung (20) eine zweite Schalteinrichtung (30) zum Schalten der ersten Schalteinrichtung (40) an eine elektrische Versorgungsspannung (U_{B}) ansteuert; **dadurch gekennzeichnet, dass** zum Erzeugen der ersten Steuersignale (S1) und des zweiten Steuersignals (S2) ein auf der Steuereinrichtung (10) ablaufendes Computerprogramm verwendet wird, wobei die ersten Steuersignale (S1) und das zweite Steuersignal (S2) periodische Wechselsignale der Steuereinrichtung (10) sind, wobei das zweite Steuersignal (S2) von den ersten Steuersignalen (S1) abgeleitet wird, wobei zum Erzeugen des zweiten Steuersignals (S2) ein Interrupt des Computerprogramms verwendet wird, der zur Generierung der ersten Steuersignale (S1) verwendet wird, wobei im Falle eines Ausbleibens der ersten Steuersignale (S1) die erste Schalteinrichtung (40) mittels der Auslöseeinrichtung (20) und der zweiten Schalteinrichtung (30) von der Versorgungsspannung (U_{B}) getrennt wird.

## Claims

1. Device (100) for driving an electronically commutated electric motor (50), wherein the device (100) has a control apparatus (10), wherein the control apparatus (10) is able to output first control signals (S1) to a first switching apparatus (40) by way of which the electric motor (50) is able to be driven, wherein the device (100) furthermore has a second switching apparatus (30) for connecting the first switching apparatus (40) to an electric supply voltage (U_{B}), wherein the first control signals (S1) are functionally coupled to a second control signal (S2) for a trigger apparatus (20) of the second switching apparatus (30), and wherein the second control signal (S2) is generated by the control apparatus (10), **characterized in that** the first control signals (S1) are periodic signals from the control apparatus (10) that are generated by way of a computer program running on the control apparatus (10), wherein the second control signal (S2) is derived from the first control signals (S1) by way of the computer program, wherein the second control signal (S2) is derived by the control apparatus (10) from a periodic interrupt that is used to generate the first control signals (S1), wherein the trigger apparatus (20) is designed as an electronic charge pump, wherein the first switching apparatus (40) is disconnected from the supply voltage (U_{B}) by way of the trigger apparatus (20) and the second switching apparatus (30) in the absence of the first control signals (S1).

2. Device according to Claim 1, wherein the second control signal (S2) has substantially half the frequency of the first control signals (S1).

3. Method for driving an electronically commutated electric motor (50), wherein a control apparatus (10) controls energization of windings of the electric motor (50) by way of a first switching apparatus (40), comprising the steps of:
- generating first control signals (S1) by way of the control apparatus (10);
- generating a second control signal (S2) by way of the control apparatus (10), wherein the first control signals (S1) and the second control signal (S2) are functionally coupled to one another; and
- driving a trigger apparatus (20) by way of the second control signal (S2), wherein the trigger apparatus (20) drives a second switching apparatus (30) to connect the first switching apparatus (40) to an electric supply voltage (U_{B}),
**characterized in that** a computer program running on the control apparatus (10) is used to generate the first control signals (S1) and the second control signal (S2), wherein the first control signals (S1) and the second control signal (S2) are periodic alternating signals from the control apparatus (10), wherein the second control signal (S2) is derived from the first control signals (S1), wherein an interrupt of the computer program that is used to generate the first control signals (S1) is used to generate the second control signal (S2), wherein the first switching apparatus (40) is disconnected from the supply voltage (U_{B}) by way of the trigger apparatus (20) and the second switching apparatus (30) in the absence of the first control signals (S1).

## Revendications

1. Arrangement (100) pour commander un moteur électrique (50) à commutation électronique, l'arrangement (100) possédant un dispositif de commande (10), des premiers signaux de commande (S1), au moyen desquels le moteur électrique (50) peut être commandé, pouvant être délivrés au niveau de premier dispositif de commutation (40) au moyen du dispositif de commande (10), l'arrangement (100) possédant en outre un deuxième dispositif de commutation (30) destiné à commuter le premier dispositif de commutation (40) à une tension d'alimentation (U_{B}) électrique, les premiers signaux de commande (S1) étant couplés fonctionnellement à un deuxième signal de commande (S2) pour un dispositif de déclenchement (20) du deuxième dispositif de commutation (30), et le deuxième signal de commande (S2) étant généré par le dispositif de commande (10), **caractérisé en ce que** les premiers signaux de commande (S1) sont des signaux périodiques du dispositif de commande (10) qui sont générés au moyen d'un programme informatique exécuté sur le dispositif de commande (10), le deuxième signal de commande (S2) étant dérivé des premiers signaux de commande (S1) au moyen du programme informatique, le deuxième signal de commande (S2) étant dérivé par le dispositif de commande (10) à partir d'une interruption périodique qui est utilisée pour générer les premiers signaux de commande (S1), le dispositif de déclenchement (20) étant réalisé sous la forme d'une pompe de charge électronique, le premier dispositif de commutation (40) étant déconnecté de la tension d'alimentation (U_{B}) au moyen du dispositif de déclenchement (20) et du deuxième dispositif de commutation (30) en cas d'absence des premiers signaux de commande (S1).

2. Arrangement selon la revendication 1, le deuxième signal de commande (S2) possédant sensiblement une demi-fréquence des premiers signaux de commande (S1).

3. Procédé pour commander un moteur électrique (50) à commutation électronique, une alimentation électrique d'enroulements du moteur électrique (50) au moyen d'un premier dispositif de commutation (40) étant commandée au moyen d'un dispositif de commande (10), comprenant les étapes suivantes :
- génération de premiers signaux de commande (S1) au moyen du dispositif de commande (10) ;
- génération d'un deuxième signal de commande (S2) au moyen du dispositif de commande (10), les premiers signaux de commande (S1) et le deuxième signal de commande (S2) étant couplés fonctionnellement entre eux ; et
- commande d'un dispositif de déclenchement (20) au moyen du deuxième signal de commande (S2), le dispositif de déclenchement (20) commandant un deuxième dispositif de commutation (30) pour commuter le premier dispositif de commutation (40) à une tension d'alimentation (U_{B}) électrique ;
**caractérisé en ce que**
un programme informatique exécuté sur le dispositif de commande (10) est utilisé pour générer les premiers signaux de commande (S1) et le deuxième signal de commande (S2), les premiers signaux de commande (S1) et le deuxième signal de commande (S2) étant des signaux alternés du dispositif de commande (10), le deuxième signal de commande (S2) étant dérivé des premiers signaux de commande (S1), une interruption du programme informatique étant utilisée pour générer le deuxième signal de commande (S2), laquelle est utilisée pour générer les premiers signaux de commande (S1), le premier dispositif de commutation (40) étant déconnecté de la tension d'alimentation (U_{B}) au moyen du dispositif de déclenchement (20) et du deuxième dispositif de commutation (30) en cas d'absence des premiers signaux de commande (S1).
